# DEMANDE DE BREVET EUROPEEN

(11) **EP 3 496 000 A1**
(43) Date de publication de la demande: **12.06.2019**
(21) Numéro de dépôt: 18306609.1
(22) Date de dépôt: 04.12.2018
(51) Int. Cl.: G06K 9/00, G06K 9/62

(54) **EXTRACTION AUTOMATIQUE D'ATTRIBUTS D'UN OBJET AU SEIN D'UN ENSEMBLE D'IMAGES NUMERIQUES**

(30) Priorité: 05.12.2017 FR 1761632
(71) Demandeur: Bull SAS, 78340 Les Clayes-sous-Bois (FR)
(72) Inventeur: OSPICI, Matthieu, 38000 GRENOBLE (FR); CECCHI, Antoine, 38000 GRENOBLE (FR); PALEO, Pierre, 38100 GRENOBLE (FR)
(74) Mandataire: Novagraaf Technologies

(57) **Abrégé**

L'invention concerne un procédé pour la reconnaissance d'objets d'un type prédéfini parmi un ensemble de types, au sein d'un ensemble d'images numériques, comportant
- la détection (11) d'un objet de ce type prédéfini au sein d'une image numérique (10) dudit ensemble, et la détermination (12) d'une zone (13) de ladite image englobant l'objet détecté ;
- la génération (14) d'une signature (15) par un réseau de neurones à convolution à partir de cette zone, permettant une identification de l'objet de façon univoque ;
- la détermination (16) à partir de la signature d'un ensemble d'attributs (17);
- la mémorisation (18) dans une base de données (19) d'un enregistrement relatif audit objet associant la signature à l'ensemble d'attributs ;
dans lequel le réseau de neurones est entrainé sur un jeu d'apprentissage composées d'un premier ensemble formé d'objets associés à un ensemble d'attributs et d'un second ensemble formé d'objets non associés à un ensemble d'attributs,

## Description

### DOMAINE DE L'INVENTION

L'invention concerne l'extraction automatique d'attributs et la recherche d'objets dans une vidéo ou un ensemble d'images numériques. Elle s'applique en particulier au suivi d'humains dans un flux vidéos dans un but de vidéo-surveillance, de ciblage marketing, de constitution de statistiques, etc.

### CONTEXTE DE L'INVENTION

Des caméras vidéos sont de plus en plus déployées dans l'espace public ou privé afin de recueillir des informations sur le comportement de personnes humaines dans une zone géographique.

Une application typique est la vidéosurveillance afin de détecter au plus tôt des informations d'intérêt (par exemple des comportements suspects), dans des zones à risque ou à surveiller (aéroport, gare, banque, etc.) ou dans tout autre espace destiné à recevoir du public, y compris dans la rue.

D'autres applications peuvent concerner des finalités commerciales ou de marketing afin de suivre et caractériser le comportement de clients potentiels dans une enceinte commerciale (boutique, centre commercial, supermarché...).

Les flux vidéos forment des quantités d'informations très importantes, au point qu'un suivi manuel devient difficile, coûteux, voire impossible dans certaines situations.

Certains outils de recherche ont été élaborés ces dernières années mais ils se basent principalement sur de l'analyse faciale, et pas sur l'apparence complète d'une personne dans des images basses résolutions.

Les solutions existantes n'offrent ainsi pas des performances suffisantes.

En outre, elles visent à suivre des humains d'une image à l'autre dans un flux d'images successives. Elles ne permettent pas de faire des recherches dans une banque d'images préalablement recueillies afin de déterminer si une personne donnée s'y trouve. A fortiori, elles ne permettent pas de retrouver, au sein d'une telle banque d'images, si des personnes correspondant à un ensemble d'attributs s'y trouvent.

### RESUME DE L'INVENTION

Le but de la présente invention est de fournir une solution palliant au moins partiellement les inconvénients précités.

A cette fin, la présente invention propose un procédé pour la reconnaissance d'objets d'un ensemble de types prédéfinis au sein d'un ensemble d'images numériques, comportant
- la détection d'un objet dudit type prédéfini au sein d'une image numérique dudit ensemble, et la détermination d'une zone de ladite image englobant ledit objet détecté ;
- la génération d'une signature par un réseau de neurones à convolution à partir de ladite zone, permettant une identification dudit objet de façon univoque ;
- la détermination à partir de ladite signature d'un ensemble d'attributs;
- la mémorisation dans une base de données d'un enregistrement relatif audit objet associant ladite signature audit ensemble d'attributs ;
dans lequel ledit réseau de neurones est entrainé sur un jeu d'apprentissage composées d'un premier ensemble formé d'objets associés à un ensemble d'attributs et d'un second ensemble formé d'objets non associés à un ensemble d'attributs,

Suivant des modes de réalisation préférés, l'invention comprend une ou plusieurs des caractéristiques suivantes qui peuvent être utilisées séparément ou en combinaison partielle entre elles ou en combinaison totale entre elles :
- ledit type prédéfini est un humain ;
- lesdites images numériques forment un flux vidéos ;
- ledit réseau de neurones de convolution comprends un réseau Restnet50 ;
- ledit jeu d'apprentissage est composé d'une pluralité de sous-jeux, chacun déterminé dans un contexte opérationnel différent ;
- l'entrainement dudit réseau de neurones à convolution est supervisé par un mécanisme mettant en jeu un « center loss » ;
- le procédé comporte en outre une étape de recherche d'un ensemble d'objets au sein de ladite base de données à partir d'un ensemble de valeurs associés à des attributs ;
- le procédé comporte en outre une étape de recherche d'un ensemble d'objets au sein de ladite base de données, à partir d'une image contenant un unique objet à rechercher ;
- ledit enregistrement associe ledit identificateur à un ensemble de valeurs représentatives des valeurs desdits attributs pour une succession d'images numériques dudit ensemble.

L'invention concerne également un programme d'ordinateur comprenant des instructions de programme pour l'exécution d'un procédé tel que précédemment définie, lorsque ledit programme est exécuté sur un ordinateur.

Ainsi, l'invention permet de nettement améliorer la qualité de la reconnaissance et détection d'objets en précisant leurs caractéristiques

Elle permet en outre de traiter des domaines d'applications supplémentaires par rapport aux solutions de l'état de l'art.

Notamment, grâce à l'association entre les personnes détectées et des attributs, la solution de l'invention peut permettre de viser la vidéo-surveillance dans le sein d'une entreprise ou sur un chantier, par exemple, afin de détecter des personnes ne respectant pas certaines règles de sécurité (port d'un gilet, d'un casque, etc.)

L'invention permet également de rechercher et d'extraire des attributs d'objets autres que des êtres humains, tels que notamment des animaux dans le cas de suivi ou de calcul de statistiques sur un parc animalier ou dans une exploitation d'élevage.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

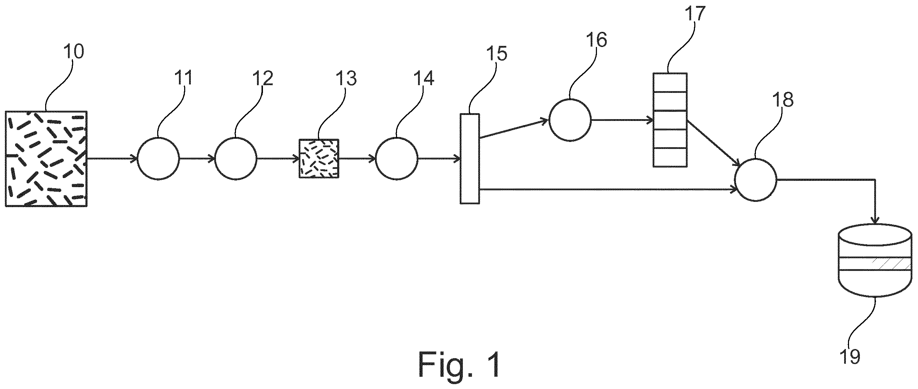

La figure 1 représente schématiquement un exemple d'organigramme illustrant un mode de réalisation de l'invention.

### DESCRIPTION DETAILLEE DE L'INVENTION

L'invention concerne le suivi d'objets d'un type prédéfini au sein d'un ensemble d'images numériques.

Les objets sont typiquement des humains, mais d'autres types d'objets peuvent être considérés sans apporter de modifications majeures aux principes de l'invention : animaux, véhicules, etc.

Dans une première étape, référencée 11, sur la figure 1, on détecte un (ou plusieurs) objets d'un type prédéfini (humain, animal, véhicule...) au sein d'une image numérique 10. L'étape suivante 12 consiste à déterminer une zone englobante pour chacun des objets détectés. Il est également possible de détecter des objets appartenant à plusieurs types (par exemple détecter des humains et des véhicules, au cours d'un même processus).

L'image numérique 10 peut être une image provenant directement d'une caméra vidéo ou d'une banque d'images. Elle peut représenter une scène dans laquelle aucun, un ou plusieurs objets peuvent être présents.

En outre, ces objets peuvent être représentés de différentes façons sur l'image numérique : notamment, dans le cas d'un humain, celui-ci peut être vu de face, de dos, de profil, debout, assis, dans une zone éclairée ou dans la pénombre, etc.

La détermination d'une zone englobant le (ou les) objets détectés consiste en la délimitation d'une zone de type prédéterminé (typiquement un rectangle) contenant l'objet détecté dans son entièreté et de dimensions minimales, ou sensiblement minimale (il peut être prévu des marges entre les extrémités de l'objet à les limites de la zone englobante.

De la sorte, l'invention permet de considérer toutes sortes d'images « brutes », telles qu'issues d'une caméra et de détecter, de façon autonome, la présence d'un objet, et le cas échéant, de procéder ensuite au suivi de cet objet, ou de ces objets lorsque la scène capturée par la caméra en comprend plusieurs.

Ces étapes de détection, 11, des objets et de détermination, 12, des zones englobantes peuvent être effectuées de différentes façons. Selon les modes de réalisation, ces deux étapes peuvent effectuées simultanément, par un même mécanisme.

Préférentiellement, un réseau de neurones à convolution est utilisé pour simultanément réduire graduellement une zone autour d'un objet et, progressivement classifié l'objet contenu dans la zone, dans une des classes recherchée (qui peut être simplement la présence ou l'absence d'un objet d'un type prédéterminé).

On obtient en fait de processus un ensemble de zones englobante (soit réduite à une surface optimale) et un degré de confiance qu'elle contient un objet du type recherché.

Un exemple d'une telle approche est décrite dans Liu Wei, Dragomir Anguelov, Dumitru Erhan, Christian Szegedy, Scott Reed, Cheng- Yang Fu et Alexander C. Berg, "SSD: Single Shot Multibox Detector", European Conférence on Computer Vision (ECCV), Springer International Publishing (2016), pp. 21-37.

Les zones englobantes, 13, ainsi déterminées peuvent ensuite être utilisées comme entrées de l'étape de génération 14 d'une signature par un réseau de neurones à convolution.

Cette signature, 15, permet de déterminer un ensemble d'attributs caractérisant l'objet détecté, et d'également identifier l'objet détecté. Autrement dit, un même réseau de neurone, via une unique phase de prédiction, permet de déterminer des informations de nature différente :
- une signature, qui permet de déterminer si un objet est le même d'une image à l'autre;
- un ensemble d'attributs permettant de caractériser cet objet.

Cette façon de faire permet des performances compatibles avec le temps réel puisqu'un seul traitement est nécessaire pour la détermination des deux types d'informations, mais aussi, et surtout, la détermination est plus précise par l'utilisation simultanée de ces deux types d'information lors de la phase d'apprentissage (ou d'entrainement) du réseau de neurones à convolution.

Il est important pour permettre un bon apprentissage du réseau de neurones de l'entrainer avec un grand nombre d'exemples.

Il existe plusieurs travaux ayant permis de constituer des jeux d'exemples à partir de captures réelles issues de caméra vidéo, auquel des attributs ont été manuellement assignés aux objets représentés.

La page suivante présente un certain nombre de tels jeux d'exemples, ou « dataset » selon la terminologie habituelle en langue anglaise:
http://www.liangzheng.org/Project/project_reid.html

Selon un mode de réalisation de l'invention, on utilise comme jeu d'apprentissage du réseau de neurones une composition d'une pluralité de sous-jeux, chacun déterminé dans un contexte opérationnel différent, c'est-à-dire déterminé par une équipe de chercheurs différents, ayant procédé par une méthodologie propre et dans un environnement propre (emplacement de la caméra, population visée, etc.)

Il est important que le nombre de sous-jeux soit important afin de permettre une meilleure représentativité des différentes images qui seront proposés ensuite au réseau de neurones en phase de prédiction, et donc de meilleures performances en généralisation.

A titre d'exemple, les sous-jeux utilisés peuvent être
- CHUK01, tel que défini dans l'article « Human Reidentificaiton with Transferred Metric Learning », de Li Wei,, Zhao Rui et Wang Wiaogang, ACCV, 2012
- CHUK03, tel que défini dans l'article « DeepReID: Deep Filter Pairing Neural Network for Person Re-identification » de Li Wei, Zhao Rui, Xiao Tong et Wang Wiaogang, CVPR, 2014
- MARS, tel que défini dans l'article « MARS: A Video Benchmark for Large-Scale Person Re-identification », de Zheng Liang, Bie Zhi, Sun Yifan, Wang Jingdong, Su Chi et Wang Shengjin, et Tian Qi, in European Conference on Computer Vision (ECCV), 2016
- ViPER, tel que défini dans l'article « Viewpoint Invariant Pedestrian Recognition with an Ensemble of Localize Features », de D. Gray, et H. Tao, in European Conference on Computer Vision (ECCV), 2008
- Market1501, tel que défini dans l'article « Improving Person Re-identificiation by Attribute and Identity Learning », de Lin Yutian, Zheng Liang, Zhang Zhedong, Wu Yu et Yang Yi, arXiv: 1703,07220, 2017

Chacun de ces « dataset » comporte des données impactées par les conditions d'acquisition et de création, quoiqu'ils visent tous à une certaine universalité. En agrégeant et combinant ces sous-ensemble, on minimise les biais apportés implicitement par les études qui ont permis de les élaborer.

En outre, selon l'invention, le réseau de neurones est entrainé sur un jeu d'apprentissage composées d'un premier ensemble formé d'objets associés à un ensemble d'attributs et d'un second ensemble formé d'objets non associés à un ensemble d'attributs.

Ainsi, tout type de sous-jeux d'entrainement peut être pris en compte : ceux qui ont fait l'objet d'une affectation manuelle d'attributs peuvent être versés dans le premier ensemble, et les autres dans le second ensemble.

Cette façon de procéder, dite « apprentissage multitâche » (ou « multi-task learning » en anglais), est intrinsèquement lié au fait que l'entrainement du réseau de neurones est effectuées pour une signature « mixte » permettant, comme il a été vu précédemment, d'identifier l'objet détecté et de déterminer un ensemble d'attributs le caractérisant.

Dès lors, le premier ensemble permettra de rendre la signature à même de représenter des attributs en plus d'être un identificateur indépendant à l'orientation de l'objet, tandis que le second ensemble permettra d'entrainer le réseau de neurones à créer une signature représentative pour un objet (identificateur), sans impact sur l'entrainement général du réseau concernant notamment sa capacité à extraire des attributs.

Le réseau de neurones est typiquement un réseau de neurones à convolution (ou « CNN » pour « *Convolutional Neural Network* »), qui est une technique bien connue dans le domaine de la ré-identification d'un objet dans une succession d'images, ainsi qu'indiqué, notamment, dans l'article *« Improving Person Re-identificiation by Attribute and Identity Learning »,* de Lin Yutian, Zheng Liang, Zhang Zhedong, Wu Yu et Yang Yi, précédemment cité.

Selon un mode de réalisation de l'invention, le réseau de neurones à convolution peut être basé sur un réseau « RestNet50 », auquel quelques couches peuvent être ajoutées (couches correspondant à la signature et aux attributs, couches correspondant à la classification, lors de l'entrainement).

Ce réseau « RestNet50 » a été décrit notamment dans l'article « Deep Residual Learning for Image Recognition », de K. He, X. Zhang, S. Ren et J. Sun, in CVPR, 2016

Autrement dit, l'architecture du réseau de neurones à convolution utilisés pour mettre en oeuvre l'invention peut être connue en soi. L'innovation réside notamment dans les mécanismes d'entraînement de ce réseau de neurones, et en particulier dans le fait que le jeu d'apprentissage est composé d'un premier ensemble formé d'objets associés à un ensemble d'attributs et d'un second ensemble formé d'objets non associés à un ensemble d'attributs

En conséquence, le réseau de neurones permet de générer une signature à partir de laquelle seront également extraits les attributs..

Selon un mode de réalisation de l'invention, en outre, l'entrainement dudit réseau de neurones à convolution est supervisé par un mécanisme mettant en jeu une « *center loss* ». Un tel mécanisme a été proposé dans l'article « A Discriminative Feature Learning Approach for Deep Face Recognition » de Yandong Wen, Kaipeng Zhang, Zhifeng Li et Yu Qiao, in European Conference on Computer Vision (ECCV), 2016, dans un cadre de reconnaissance faciale.

Ce mécanisme vise à fournir un signal qui, lors de l'apprentissage, va favoriser le regroupement des caractéristiques reconnues appartenant à une même classe. Il permet ainsi d'accroitre le caractère discriminant des classes de caractéristiques apprises.

Il a été démontré expérimentalement qu'il était important, dans le contexte de l'invention, d'en effet obtenir des classes bien discriminées en sortie du réseau de neurones.

Plus concrètement, la fonction d'apprentissage du « center loss » tend à rassembler une signature obtenue par présentation d'une image numérique en entrée du réseau de neurones, autour d'un « centre » de la classe correspondante. Ce centre (c'est-à-dire un vecteur similaire à une signature, correspondant à la couche de sortie du réseau de neurones) fait ainsi l'objet d'un apprentissage en même temps que le réseau de neurones lui-même.

Lors de la phase d'exploitation du réseau de neurones, on peut lui présenter une image numérique nouvelle. Les capacités de généralisation du réseau de neurones permettent alors la génération d'une signature.

Cette signature correspond à des caractéristiques internes apprises par le réseau de neurones (« *deep features* » ou caractéristiques profondes).

La détermination, 16 d'un ensemble d'attributs, 17, à partir de la signature, 15, peut être mise en oeuvre par une couche de classification.

La signature peut être vue comme un vecteur de valeurs. Selon un mode de réalisation concret mis en place par les inventeurs, la signature est un vecteur de 4096 valeurs.

Cette signature 15 permet d'identifier un objet de façon univoque.

Si deux images numériques distinctes représentent un même objet, le réseau de neurones doit pouvoir générer deux signatures semblables. Inversement, il doit générer deux signatures distinctes pour deux images numériques différentes. Selon un mode de réalisation concret mis en place, la mesure de similarité se fait via un calcul de distance entre les signatures, un exemple de distance étant la mesure cosinus.

De cette signature 15 sont extraits un ensemble d'attributs 17.

Les attributs peuvent dépendre du type d'objets que l'on cherche à identifier. Dans cas d'êtres humains, les attributs peuvent comprendre : genre, couleurs des vêtements hauts, couleurs des vêtements bas, longueur des cheveux, etc.

Plus particulièrement, les valeurs de la signature permettent d'établir une probabilité pour chaque attribut. Différents mécanismes de seuillage peuvent être mis en place, selon les cas d'usage souhaités.

Dans une étape 18, on mémorise dans une base de données 19 un enregistrement relatif à l'objet déterminé, qui associe son signature et ses valeurs d'attributs. D'autres informations peuvent en outre être mémorisées dans cet enregistrement, tels que par exemple un horodatage ou des données techniques (identificateur de la caméra vidéos, etc.)

Selon un mode de réalisation de l'invention, plutôt que de mémoriser des valeurs d'attributs et de signatures chaque image numérique, on calcule une valeur représentative de l'attribut et de la signature sur une succession d'images numériques. Cette succession peut être définie par une fenêtre temporelle glissante d'une séquence vidéo. Il peut par exemple s'agir d'une valeur moyenne des valeurs (ou probabilités) des attributs ainsi que celles des signatures. On consolide ainsi les résultats en écartant des éventuels résultats aberrants.

Selon des modes de réalisation de l'invention, on peut exploiter les résultats mémorisés dans la base de données 19 en y effectuant des recherches.

Ces recherches peuvent être déclenchées manuellement, lorsqu'un utilisateur souhaite rechercher des objets identifiés ou bien correspondant à un signalement, etc.

Elles peuvent également être déclenchées automatiquement, afin de déterminer différents résultats de statistiques, des comparaisons entre différentes séquences d'images, etc.

Les recherches peuvent être effectuées à partir d'un ensemble de valeurs associées à des attributs : il suffit alors de déterminer l'ensemble des enregistrements dont les valeurs d'attributs correspondent aux critères de recherche sur les attributs. Il est ainsi possible de rechercher tous les êtres humains ayant des vêtements d'une couleur donnée, etc.

Les recherches peuvent également être effectuées à partir d'une image contenant un unique objet à rechercher. Cette image peut alors faire l'objet d'un traitement similaire à celui décrit précédemment afin de déterminer une signature, via le réseau de neurones à convolution, Cette signature peut alors être utilisée comme critère de recherche dans la base de données 19.

Bien entendu, la présente invention n'est pas limitée aux exemples et au mode de réalisation décrits et représentés, mais elle est susceptible de nombreuses variantes accessibles à l'homme de l'art.

## Revendications

1. Procédé pour la reconnaissance d'objets d'un ensemble de types prédéfinis au sein d'un ensemble d'images numériques, comportant
- la détection (11) d'un objet d'un type prédéfini parmi ledit ensemble, au sein d'une image numérique (10) dudit ensemble, et la détermination (12) d'une zone (13) de ladite image englobant ledit objet détecté ;
- la génération (14) d'une signature (15) par un réseau de neurones à convolution à partir de ladite zone, permettant une identification dudit objet de façon univoque ;
- la détermination (16) à partir de ladite signature d'un ensemble d'attributs (17);
- la mémorisation (18) dans une base de données (19) d'un enregistrement relatif audit objet associant ladite signature audit ensemble d'attributs ;
dans lequel ledit réseau de neurones est entrainé sur un jeu d'apprentissage composées d'un premier ensemble formé d'objets associés à un ensemble d'attributs et d'un second ensemble formé d'objets non associés à un ensemble d'attributs,

2. Procédé selon la revendication précédente, dans lequel ledit type prédéfini comprend un humain.

3. Procédé selon l'une des revendications précédentes, dans lequel lesdites images numériques forment un flux vidéos

4. Procédé selon l'une des revendications précédentes, dans lequel ledit réseau de neurones de convolution comprend un réseau Restnet50.

5. Procédé selon l'une des revendications précédentes, dans lequel ledit jeu d'apprentissage est composé d'une pluralité de sous-jeux, chacun déterminé dans un contexte opérationnel différent.

6. Procédé selon l'une des revendications précédentes, dans lequel l'entrainement dudit réseau de neurones à convolution est supervisé par un mécanisme mettant en jeu un « center loss »

7. Procédé selon l'une des revendications précédentes, comportant en outre une étape de recherche d'un ensemble d'objets au sein de ladite base de données à partir d'un ensemble de valeurs associés à des attributs.

8. Procédé selon l'une des revendications précédentes, comportant en outre une étape de recherche d'un ensemble d'objets au sein de ladite base de données, à partir d'une image contenant un unique objet à rechercher.

9. Procédé selon l'une des revendications précédentes, dans lequel ledit enregistrement associe ledit identificateur à un ensemble de valeurs représentatives des valeurs desdits attributs pour une succession d'images numériques dudit ensemble.

10. Programme d'ordinateur comprenant des instructions de programme pour l'exécution d'un procédé selon l'une des revendications précédentes, lorsque ledit programme est exécuté sur un ordinateur.
